# EUROPEAN PATENT APPLICATION

(11) **EP 4 601 170 A1**
(43) Date of publication of application: **13.08.2025**
(21) Application number: 25155473.9
(22) Date of filing: 03.02.2025
(51) Int. Cl.: H02M 1/00, H02M 1/12, H02M 5/458, H02P 27/08, H02P 29/50

(54) **MOTOR DRIVING APPARATUS AND AIR CONDITIONER INCLUDING THE SAME**

(30) Priority: 08.02.2024 KR 20240019551
(71) Applicant: LG Electronics Inc., Yeongdeungpo-gu Seoul 07336 (KR)
(72) Inventor: KANG, Myeongkyu, Seoul 08592 (KR); GONG, Phillsik, Seoul 08592 (KR); OH, Jeongeon, Seoul 08592 (KR); KIM, Sanghyeon, Seoul 08592 (KR); JEONG, Hoejeong, Seoul 08592 (KR)
(74) Representative: Vossius & Partner Patentanwälte Rechtsanwälte mbB

(57) **Abstract**

A motor driving apparatus and an air conditioner including the same are disclosed. The motor driving apparatus includes: a rectifier; a capacitor to store a pulsating voltage from the rectifier; a first voltage detector to detect the pulsating voltage; a harmonic reducer disposed between the rectifier and the capacitor and including at least one switching element and a second capacitor, and to reduce harmonics in a three-phase AC voltage; a current detector to detect a current flowing in the harmonic reducer; a second voltage detector to detect a voltage at both ends of the second capacitor; an inverter to output a converted AC voltage to a motor; and a controller to control the harmonic reducer, based on the pulsating voltage, the current detected by the current detector, and the voltage detected by the second voltage detector. Accordingly, it is possible to reduce harmonics without detecting an input current.

## Description

### BACKGROUND

### 1. Field

The present disclosure relates to a motor driving apparatus and an air conditioner including the same, and more particularly to a motor driving apparatus capable of reducing harmonics without detecting an input current when a three-phase AC voltage is input, and an air conditioner including the same.

### 2. Description of the Related Art

An air conditioner is an apparatus for discharging cool or hot air into a room to adjust room temperature and to purify air in the room, thereby providing a comfortable room environment to users. Generally, the air conditioner includes an indoor device installed in a room and including a heat exchanger, and an outdoor device including a compressor, a heat exchanger, etc., and configured to supply refrigerant to the indoor device.

Meanwhile, a compressor motor driving device is used to drive a compressor of an air conditioner.

The compressor motor driving device converts an input AC voltage into a DC voltage, stores the converted AC voltage based on a capacitor, and operates an inverter based on the DC voltage stored in the capacitor to drive the compressor motor.

Recently, a film capacitor is widely used, rather than an electrolytic capacitor, such that the capacitor provided in the compressor motor driving device may be manufactured in a compact size.

However, compared to the electrolytic capacitor, the film capacitor has a low capacitance, such that the ripple of the voltage stored in the capacitor becomes larger, and harmonic components of the input AC voltage increase.

According to the International Standard for surge protection IEC 61000-3-12 that specifies limits for harmonics, it is required to meet requirements for Total Harmonic Distortion (THD) and Partial Weighted Harmonic Distortion (PWHD).

Korean Patent No. 10-1905480, which is a related art, discloses a motor driving apparatus and an air conditioner including the same, in which a harmonic reducer for reducing harmonics is included.

However, the related art has a problem in that only the 14th and higher harmonics are compensated such that harmonic components of orders 5, 7, 11, 13, and the like are not compensated, thereby causing distortion of harmonics in the current outputted to the inverter.

Meanwhile, according to the related art document, an input current needs to be detected when a three-phase AC voltage is input, and harmonic compensation needs to be performed based on the detected input current, which requires a separate communication line or the like.

### SUMMARY

It is an objective of the present disclosure to provide a motor driving apparatus capable of reducing harmonics without detecting an input current when a three-phase AC voltage is input, and an air conditioner including the same.

It is another objective of the present disclosure to provide a motor driving apparatus capable of efficiently reducing a specific order harmonic of an input current based on a three-phase AC voltage, and an air conditioner including the same.

It is yet another objective of the present disclosure to provide a motor driving apparatus capable of reducing harmonic distortion of a current flowing through an inverter, and an air conditioner including the same.

In accordance with an aspect of the present disclosure, the above and other objectives can be accomplished by providing a motor driving apparatus and an air conditioner including the same, which include: a rectifier configured to rectify a three-phase alternating current (AC) voltage; a capacitor configured to store a pulsating voltage from the rectifier; a first voltage detector configured to detect the pulsating voltage stored in the capacitor; a harmonic reducer disposed between the rectifier and the capacitor and including at least one switching element and a second capacitor, and configured to reduce harmonics in the three-phase AC voltage; a current detector configured to detect a current flowing in the harmonic reducer; a second voltage detector configured to detect a voltage at both ends of the second capacitor in the harmonic reducer; an inverter including a plurality of switching elements, and configured to output a converted AC voltage to a motor based on a voltage at both ends of the capacitor; and a controller configured to control the harmonic reducer, based on the pulsating voltage from the first voltage detector, the current detected by the current detector, and the voltage detected by the second voltage detector.

Meanwhile, the harmonic reducer, the current detector, the first voltage detector, the second voltage detector, and the controller may be disposed on a first circuit board, wherein the inverter may be disposed on a second circuit board spaced apart from the first circuit board.

Meanwhile, the rectifier and the capacitor may be further disposed on the second circuit board.

Meanwhile, the motor driving apparatus and the air conditioner including the same may further include a second current detector configured to detect a second current flowing between the capacitor and the inverter, wherein the controller may be configured to control the harmonic reducer based on the pulsating voltage from the first voltage detector, the current detected by the current detector, the voltage detected by the second voltage detector, and the second current detected by the second current detector.

Meanwhile, the harmonic reducer, the current detector, the first voltage detector, the second voltage detector, and the controller may be disposed on the first circuit board, wherein the inverter may be disposed on a second circuit board spaced apart from the first circuit board.

Meanwhile, the motor driving apparatus and the air conditioner including the same may further include a third current detector configured to detect a third current flowing between the rectifier and the capacitor, wherein the controller may be configured to control the harmonic reducer based on the pulsating voltage from the first voltage detector, the current detected by the current detector, the voltage detected by the second voltage detector, and the third current detected by the third current detector.

Meanwhile, the harmonic reducer, the current detector, the first voltage detector, the third current detector, the second voltage detector, and the controller may be disposed on a first circuit board, wherein the inverter may be disposed on a second circuit board spaced apart from the first circuit board.

Meanwhile, the harmonic reducer may be turned off based on increase and then decrease of the output power of the inverter, and may be turned on based on decrease and then increase of the output power of the inverter.

Meanwhile, the harmonic reducer may be turned on based on increase of the output power of the inverter.

Meanwhile, the harmonic reducer may be turned on during a first period based on increase of the output power of the inverter, the harmonic reducer may be turned off during a second period based on increase and then decrease of the output power of the inverter, and the harmonic reducer may be turned on during a third period based on decrease and then increase of the output power of the inverter.

Meanwhile, the pulsating voltage stored in the capacitor may be less than the harmonic reducer is turned off than when turned on.

Meanwhile, the controller may be configured to control a switching operation of the switching element, based on a 6th or 12th harmonic component of the pulsating voltage.

Meanwhile, the controller may be configured to generate a current reference based on the 6th or 12th harmonic component of the pulsating voltage, and to control operation of the harmonic reducer based on the generated current reference.

Meanwhile, the controller may be configured to increase a turn-on duty of the switching element as the 6th or 12th harmonic component of the pulsating voltage increases.

Meanwhile, the harmonic reducer may include: an inductor, a first switching element, and a second capacitor which are connected between both ends of the capacitor; and a second switching element connected between the inductor and the first switching element and between the second capacitor and the capacitor.

Meanwhile, the controller may be configured to extract a 40th or lower harmonic component of the pulsating voltage, and may control the harmonic reducer based on the extracted harmonic current.

Meanwhile, the capacitor may include a film capacitor.

Meanwhile, the motor driving apparatus and the air conditioner including the same may further include an inverter controller configured to control the inverter.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a view showing the construction of an air conditioner according to an embodiment of the present disclosure,
FIG. 2 is a schematic view showing an outdoor device and an indoor device of FIG. 1;
FIG. 3 is an example block diagram illustrating a motor driving apparatus for driving a compressor in an outdoor device of FIG. 1;
FIG. 4 is an example internal block diagram illustrating the inverter controller of FIG. 3;
FIG. 5 is a diagram illustrating an example of a motor driving apparatus;
FIGS. 6A to 6D are diagrams referred to in the description of the motor driving apparatus of FIG. 3;
FIG. 7 is an example circuit diagram illustrating a motor driving apparatus according to an embodiment of the present disclosure;
FIGS. 8 to 15 are diagrams referred to in the description of FIG. 7;
FIG. 16 is an example circuit diagram illustrating a motor driving apparatus according to another embodiment of the present disclosure;
FIG. 17 is an example circuit diagram illustrating a motor driving apparatus according to yet another embodiment of the present disclosure.

### DETAILED DESCRIPTION OF THE PREFERRED EMBODIMENTS

Exemplary embodiments of the present invention will be described with reference to the accompanying drawings.

The terms "module" and "unit," when attached to the names of components are used herein to help the understanding of the components and thus they should not be considered as having specific meanings or roles. Accordingly, the terms "module" and "unit" may be used interchangeably.

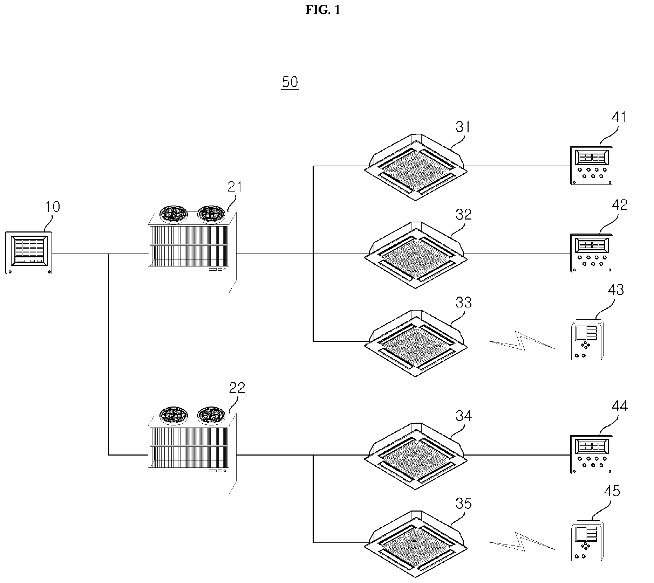

FIG. 1 is a view showing the construction of an air conditioner according to an embodiment of the present disclosure.

As illustrated in FIG. 1, the air conditioner according to the embodiment of the present disclosure is a large-sized air conditioner 100, and may include a plurality of indoor devices 31 to 35, a plurality of outdoor devices 21 and 22 connected to the plurality of indoor devices 31 to 35, a plurality of remote controls 41 to 45 connected to the respective indoor devices, and a remote controller 10 for controlling the plurality of indoor devices and outdoor devices.

The remote controller 10 may be connected to the plurality of indoor devices 31 to 36 and the plurality of outdoor devices 21 and 22 to monitor and control operations thereof. In this case, the remote controller 10 may be connected to the plurality of indoor devices to perform operation setting, locking setting, schedule control, group control, and the like.

Any one of a stand type air conditioner, a wall mount type air conditioner, and a ceiling type air conditioner may be used as the air conditioner, but a ceiling type air conditioner will be described below by way of example, for the convenience of description. In addition, the air conditioner may further include at least one of a ventilator, an air purifier, a humidifier, and a heater, which may be operated in response to the operations of the indoor devices and the outdoor devices.

The outdoor devices 21 and 22 may include a compressor (not shown) for receiving and compressing a refrigerant, an outdoor heat exchanger (not shown) for heat exchange between the refrigerant and outside air, an accumulator (not shown) for extracting a gaseous refrigerant from the received refrigerant and supplying the refrigerant to the compressor, and a four-way valve (not shown) for selecting a refrigerant passage for a heating operation. In addition, the outdoor devices 21 and 22 may further include a plurality of sensors, valves, an oil recovery device, etc., but a description thereof will be omitted below.

The outdoor devices 21 and 22 operate the compressor and the outdoor heat exchanger included therein, to compress or heat exchange the refrigerant according to a setting, and supply the refrigerant to the indoor devices 31 to 35. The outdoor devices 21 and 22 are driven by a request from the remote controller 10 or the indoor devices 31 to 35, and a cooling/heating capacity changes according to the driven outdoor devices, such that a number of operating outdoor devices and a number of operating compressors installed in the outdoor devices may change.

In this case, the following description will be made based on an example in which the plurality of outdoor devices 21 and 22 respectively supply the refrigerant to each of the indoor devices connected thereto, but depending on a connection structure of the outdoor devices and the indoor devices, the plurality of outdoor devices may be connected to each other to supply the refrigerant to the plurality of indoor devices.

The indoor devices 31 to 35 may be connected to any one of the plurality of outdoor devices 21 and 22, to be supplied with the refrigerant and to discharge cool or hot air into a room. The indoor devices 31 to 35 include an indoor heat exchanger (not shown), an indoor fan (not shown), an expansion valve (not shown) in which the supplied refrigerant is expanded, and a plurality of sensors (not shown).

In this case, the outdoor devices 21 and 22 and the indoor devices 31 to 35 may be connected to each other via a communication line to transmit and receive data therebetween, and the outdoor devices 21 and 22 and the indoor devices 31 to 35 may be connected to the remote controller 10 via another communication line to operate under the control of the remote controller 10.

The remote controls 41 to 45, which are connected to the respective indoor devices, may transmit a user's control command to the indoor devices, and may receive and display information about the state of the indoor devices. In this case, the remote controls communicate by wire or wirelessly with the indoor devices depending on the manner in which the input devices are connected to the indoor devices, and in some cases a single remote control may be connected to the plurality of indoor devices such that settings of the plurality of indoor devices may be changed by the input of the single remote control.

In addition, each of the remote controls 41 to 45 may include a temperature sensor provided therein.

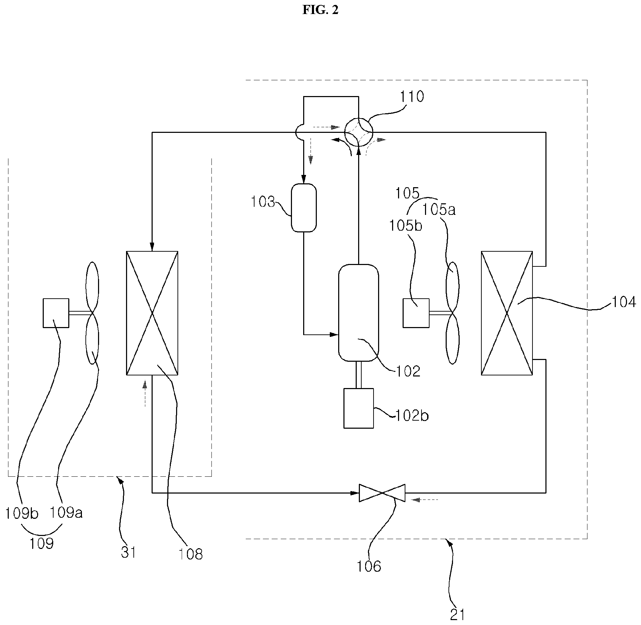

FIG. 2 is a schematic view showing an outdoor device and an indoor device of FIG. 1.

Referring to the drawing, the air conditioner 100 is basically divided into an indoor device 31 and an outdoor device 21.

The outdoor device 21 includes a compressor 102 for compressing refrigerant, a compressor motor 102b for driving the compressor, an outdoor heat exchanger 104 for cooling the compressed refrigerant, an outdoor blower 105 including an outdoor fan 105a disposed at one side of the outdoor heat exchanger 104 for accelerating the cooling of the refrigerant and a motor 105b for rotating the outdoor fan 105a, an expansion device 106 for expanding the condensed refrigerant, a cooling/heating switch valve 110 for changing the path of the compressed refrigerant, and an accumulator 103 for temporarily storing the gaseous refrigerant, removing moisture and foreign matter from the refrigerant, and supplying the refrigerant to the compressor under a predetermined pressure.

An indoor device 31 includes an indoor heat exchanger 109 disposed in a room for performing cooling/heating and an indoor blower 109 including an indoor fan 109a disposed at one side of the indoor heat exchanger 109 for accelerating the cooling of the refrigerant and a motor 109b for rotating the indoor fan 109a.

At least one indoor heat exchanger 109 may be installed. An inverter compressor or a fixed speed compressor may be used as the compressor 102.

In addition, the air conditioner 100 may be configured as a cooler for cooling a room or as a heat pump for cooling or heating a room.

A single indoor device 30a and a single outdoor device 20 are shown in FIG. 2. However, the present disclosure is not limited thereto. The present disclosure may also be applied to a multi-type air conditioner including a plurality of indoor devices and a plurality of outdoor devices or an air conditioner including a single indoor device and a plurality of outdoor devices.

The compressor 102 in the outdoor device 21 may be driven by a motor driving apparatus 200 for compressor driving, which drives a compressor motor 250.

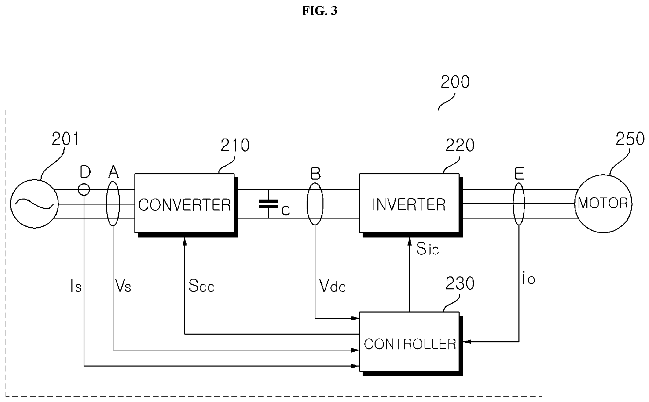

FIG. 3 is an example block diagram illustrating a motor driving apparatus for driving a compressor in the outdoor device of FIG 1.

First, a motor driving apparatus 200 of FIG. 3 includes an inverter 220 configured to output a three-phase alternating current (AC) voltage to a compressor motor 250, a converter 210 configured to supply a direct current (DC) voltage to the inverter 220, a controller 230 configured to control the converter 210, and an inverter controller 230b configured to control the inverter 220.

The motor driving apparatus 200 receives AC power from a power supply system and converts the received power and supplies the converted power to the compressor motor 250. In this regard, the motor driving apparatus 200 may be referred to as a power conversion device or a compressor driving device.

Meanwhile, the motor driving apparatus according to an embodiment of the present disclosure employs a DC-DC capacitor C having a low capacitance of several tens of µF or less. For example, the low-capacitance DC-DC capacitor C may include a film capacitor, rather than an electrolytic capacitor.

When the low-capacitance capacitor C is used, the DC link voltage pulsates due to an increased variation thereof and, as such, little or no smoothing operation of the DC link capacitor is achieved.

The motor driving device, which includes a DC link capacitor having a low capacitance of several tens of µF or less, as described above, may be referred to as a "capacitorless motor driving device."

The following description will be given of the motor driving apparatus 200, which includes the low-capacitance DC-DC capacitor C.

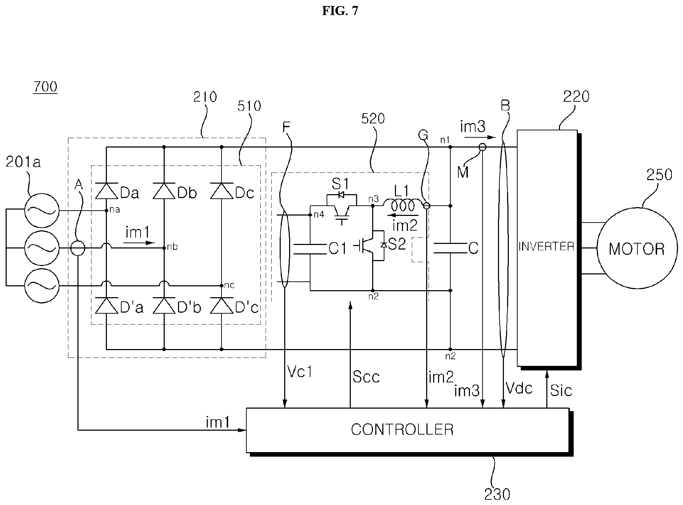

In this embodiment, the converter 210 that supplies DC power to the inverter 220 receives a three-phase AC voltage and converts the three-phase AC voltage into a DC voltage. To this end, the converter 210 may include a rectifier 510 (see FIG. 7).

The rectifier 510 (see FIG. 7) rectifies a three-phase AC voltage 201 input thereto, and outputs rectified power. If the three-phase AC voltage 201 is a three-phase AC voltage, the rectifier 510 may rectify and output the three-phase AC voltage.

Meanwhile, the converter 210 may also include a boost converter for boosting voltage, in consideration of a pulsating voltage at both ends of the DC link capacitor C.

The DC link capacitor C is connected to an output terminal of the converter 210. The DC link capacitor C may store a pulsating voltage output from the converter 210. The voltage output from the converter 210 is a DC voltage, such that the capacitor C may be referred to as a DC link capacitor.

An input voltage detector A may detect an input voltage Vs from the three-phase AC voltage 201. For example, the input voltage detector A may be located upstream of the converter 210.

For detection of voltage, the input voltage detector A may include a resistor, an operational amplifier (OP AMP), and the like. The detected input voltage Vs may be a pulse type discrete signal and may be applied to the controller 230.

Meanwhile, a zero crossing point of the input voltage may also be detected by the input voltage detector A.

The DC voltage detector B may detect a pulsating voltage Vdc across the DC link capacitor C. For detection of voltage, the DC voltage detector B may include a resistor, an operational amplifier (OP AMP), and the like. The detected voltage Vdc across the DC link capacitor C may be a pulse type discrete signal and may be applied to the controller 230. An inverter switching control signal Sic may be generated based on the DC voltage Vdc across the DC link capacitor C.

The controller 230 may output a converter switching control signal Scc to the converter 210 in order to control a switching operation of the converter 210.

The converter switching control signal Scc is a pulse width modulated (PWM) switching control signal which may be generated and outputted based on a pulsating voltage Vdc at both ends of the DC link capacitor C.

The inverter 220 may include a plurality of inverter switching elements, and may convert a DC link voltage Vdc into a three-phase AC voltage having a predetermined frequency according to on/off operations of the switching elements, and may output the three-phase AC voltage to the motor 250 which is a three-phase motor.

Specifically, the inverter 220 includes a plurality of switching elements. For example, in the inverter 220, upper arm switching elements Sa, Sb, and Sc and lower arm switching element S'a, S'b, and S'c which are connected in series with each other form a pair, and a total of three pairs of upper and lower arm switching elements Sa&S'a, Sb&S'b, and Sc&S'c are connected in parallel with each other. In addition, diodes may be connected in anti-parallel to the respective switching elements Sa, S'a, Sb, S'b, Sc, and S'c.

The inverter controller 230b may output an inverter switching control signal Sic to the inverter 220 in order to control a switching operation of the inverter 220.

Meanwhile, the inverter switching control signal Sic is a pulse width modulated (PWM) switching control signal.

The inverter switching control signal Sic may be generated based on an output current iₒ flowing through the motor 250 or a DC link voltage Vdc across the DC link capacitor C, and the generated switching control signal Sic may be output. In this case, the output current iₒ may be detected by an output current detector E, and the DC link voltage Vdc may be detected by the DC link voltage detector B.

The output current detector E may detect the output current iₒ flowing between the inverter 220 and the motor 250. That is, the output current detector E detects a current flowing through the motor 250. The output current detector E may detect output currents of all phases, namely, output currents iₐ, i_{b}, and i_{c}. Alternatively, the output current detector E may detect output currents of two phases through balance among three phases.

The output current detector E may be disposed between the inverter 220 and the motor 250. For current detection, a current transformer (CT), a shunt resistor, etc. may be used as the output current detector E.

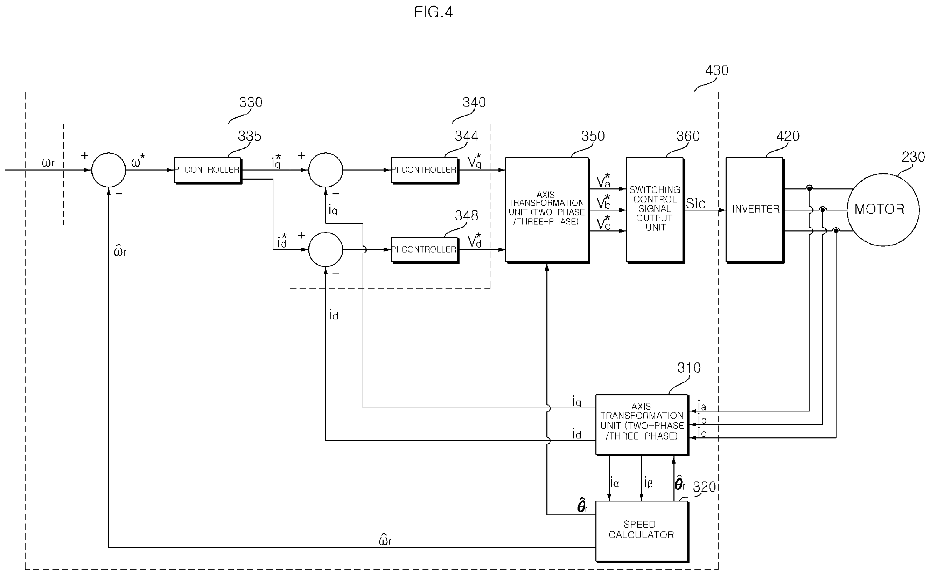

FIG. 4 is an example internal block diagram illustrating the inverter controller of FIG. 3.

Referring to FIG. 4, the inverter controller 230b may include an axis converter 310, a speed calculator 320, a current reference generator 330, a voltage reference generator 340, an axis converter 350, and a switching control signal output portion 360.

The axis converter 310 receives the three-phase output currents ia, ib, and ic detected by the output current detector E and transforms the received output currents ia, ib, and ic into two-phase currents iα and iβ of a stationary coordinate system.

Meanwhile, the axis converter 310 may transform the two-phase currents iα and iβ of the stationary coordinate system into two-phase currents id and iq of a rotating coordinate system.

The speed calculator 320 estimates a position *θ̂ᵣ* of a rotor of the motor 250 based on the two-phase currents i_{α} and i_{β} of a stationary coordinate system which is transformed by the axis converter 310. In addition, the speed calculator 320 may output a calculated speed ω̂*ᵣ* based on the estimated position *θ̂ᵣ* of the rotor of the motor 250.

Meanwhile, the current reference generator 330 calculates a speed reference value ω^{*}ᵣ based on the calculated speed . ω̂*ᵣ* and a target speed ω, and generates a current reference value i^{*}_{q} based on the speed reference value ω^{*}ᵣ. For example, a PI controller 435 of the current reference generator 330 may perform PI control based on the speed reference value ω^{*}ᵣ which is a difference between the calculated speed. ω̂*ᵣ* and the target speed ω, and may generate a current reference value i*_{q}. A q-axis current reference value i*_{q} is shown as the current reference value, but unlike the drawing, a d-axis current reference value i^{*}_{d} may also be generated together with the q-axis current reference value i*_{q}. Meanwhile, the d-axis current reference value i*_{d} may be set to 0.

Meanwhile, the current reference generator 330 may further include a limiter (not shown) for limiting the level of the current reference value i*_{q} such that the current reference value i*_{q} does not exceed an allowable range.

Then, the voltage reference generator 340 generates d-axis and q-axis voltage reference values V*_{q} and V*_{q} based on d-axis and q-axis currents i_{d} and i_{q} which are transformed by the axis converter into currents in a two-phase rotating coordinate system and the current reference values i*_{d} and i^{*}_{q} generated by the current reference generator 330 and the like. For example, a PI controller 444 of the voltage reference generator 340 may perform PI control based on the difference between the q-axis current i_{q} and the q-axis current reference value i*_{q} to generate a q-axis voltage reference value V*_{q}. In addition, a PI controller 448 of the voltage reference generator 340 may perform PI control based on the difference between the d-axis current i_{d} and the d-axis current reference value i*_{d} to generate a d-axis voltage reference value V*_{d}. Meanwhile, the d-axis voltage reference value V*_{d} may be set to 0 corresponding to the case where the d-axis current reference value i*_{d} is set to 0.

Meanwhile, the voltage reference generator 340 may further include a limiter (not shown) for limiting levels of the d-axis and q-axis voltage reference values V*_{d} and V*_{q} so that the d-axis and q-axis voltage reference values V*_{d} and V*_{q} do not exceed allowable ranges.

Meanwhile, the generated d-axis and q-axis voltage reference values V*_{d} and V*_{q} are inputted to the axis converter 350.

The axis converter 350 receives the calculated position *θ̂ᵣ* and the d-axis and q-axis voltage reference values V^{*}_{d} and V*_{q} from the position estimator 320 to perform axis transformation.

First, the axis converter 350 performs transformation from a two-phase rotating coordinate system to a two-phase stationary coordinate system. At this time, the position *θ̂ᵣ* calculated by the position estimator 320 may be used.

Subsequently, the axis converter 350 performs transformation from the two-phase stationary coordinate system to a three-phase stationary coordinate system. As a result, the axis converter 350 outputs three-phase output voltage reference values V*a, V*b, and V*c.

The switching control signal output portion 360 generates and outputs a PWM-based inverter switching control signal S_{ic} based on the three-phase output voltage reference values V*a, V*b, and V*c.

The output inverter switching control signal S_{ic} may be converted into a gate driving signal by a gate driver (not shown) and may then be inputted to a gate of each switching element of the inverter 220. As a result, the respective switching elements Sa, S'a, Sb, S'b, Sc, and S'c of the inverter 220 perform switching operations.

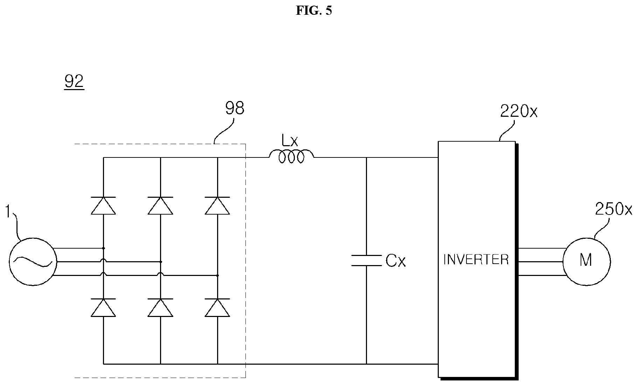

FIG. 5 is a diagram illustrating an example of a motor driving apparatus.

Referring to the drawing, a motor driving apparatus 92 of FIG. 5 may include a rectifier 98 configured to rectify a three-phase alternating current (AC) voltage, a reactor Lx for reducing harmonics, a capacitor Cx, and an inverter 220x connected between both ends of the capacitor Cx, and configured to output an AC voltage to a motor 250x based on a voltage at both ends of the capacitor Cx.

According to the International Standard for surge protection IEC 61000 that specifies limits for reducing harmonics, the motor driving apparatus 92 of FIG. 5 includes the reactor Lx for reducing harmonics.

Particularly, in order to reduce harmonics in an input current, the motor driving apparatus 92 of FIG. 5 may adopt a method of controlling the inverter 220x by detecting a voltage applied to the reactor Lx.

However, the method has a drawback in that harmonics in the inverter 220x increase, and it is required to add a dc reactor Lx, thereby increasing production costs.

In order to solve the above problem, the present disclosure proposes a scheme for efficiently reducing the output harmonics of the inverter, which will be described below with reference to FIG. 7 and subsequent figures.

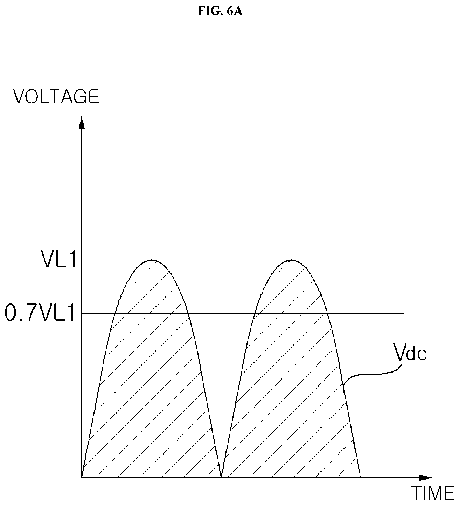

FIGS. 6A to 6D are diagrams referred to in the description of the motor driving apparatus of FIG. 3.

First, FIG. 6A illustrates a DC link voltage Vdc generated when a low-capacitance DC link capacitor C is connected to a rectifier without using a boost converter in the converter 210.

As illustrated herein, when the low-capacitance DC link capacitor C is used, the DC link voltage Vdc cannot be smoothed by the low-capacitance DC link capacitor C and, as such, is directly applied in a pulsating state to the inverter 220.

In this case, the pulsating DC link voltage Vdc has an average voltage level of about 0.7VL1 which is lower than a peak voltage level VL1.

The inverter 220 may generate a 3-phase AC voltage using a voltage of about 0.7 VL1. However, it is difficult to achieve smooth motor driving at a voltage level lower than about 0.7 VL1. For this reason, voltage usage rate becomes low.

Meanwhile, when an input voltage has a frequency of about 60 Hz, voltage ripple of about 120 Hz corresponding to twice the frequency of the input voltage may be generated.

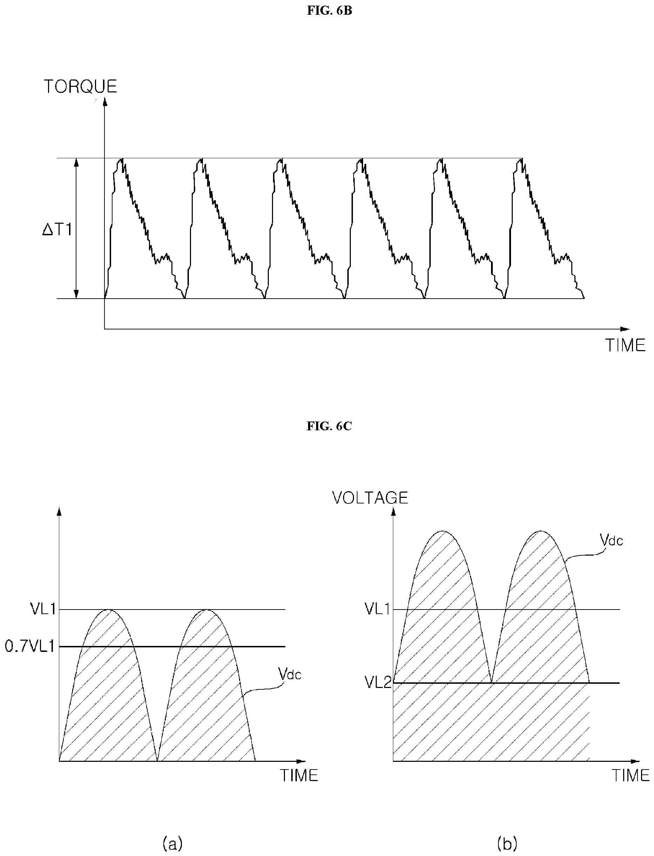

Meanwhile, in the case where the motor 250 is driven through the inverter 220 using the pulsating voltage as illustrated in FIG. 6A, torque ripple corresponding to ΔT1 is generated as illustrated in FIG. 6B. Such torque ripple causes vibration and noise.

Meanwhile, if capacitance of the low-capacitance DC link capacitor C decreases, a current thereof is not controlled such that low input power factor characteristics may be exhibited.

In order to solve the above problem, a three-phase input voltage is used as an input voltage in the present disclosure. By using an input voltage with 3-phase which is higher than single-phase, an actual voltage usage rate may increase.

Alternatively, in order to solve the above problem, the boost converter may be arranged downstream of the rectifier in the converter 210.

FIG. 6C illustrates a DC link voltage Vdc generated using a boost converter and a low-capacitance DC link capacitor C.

When the DC link voltage Vdc is stepped up by a voltage VL2 using the boost converter, a pulsating voltage having a minimum voltage level of VL2 and a peak voltage level of VL2+VL1 is outputted to a DC link. In this case, the DC link voltage Vdc has an average voltage level of about VL1.

While the inverter 220 may generate a three-phase AC voltage using a voltage of about VL1, it is possible to smoothly drive the motor in a large portion of the overall voltage period. Accordingly, a voltage usage rate increases, and an operation range of the motor increases.

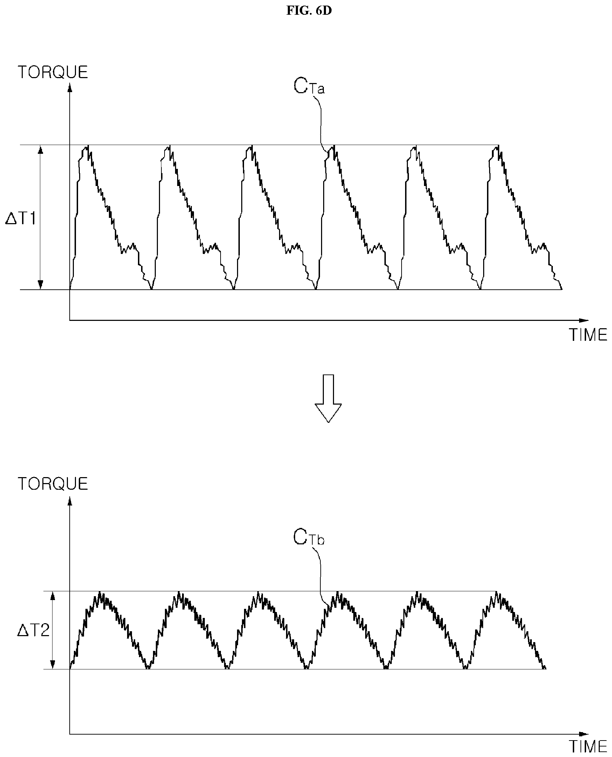

Meanwhile, when the motor 250 is driven through the inverter 220 based on a DC link voltage Vdc generated using the boost converter and the low-capacitance DC link capacitor C as illustrated in FIG. 6C, torque ripple corresponding to ΔT2 may be generated. That is, torque ripple corresponding to ΔT2 smaller than ΔT1 of FIG. 6A may be generated as illustrated in FIG. 6D. That is, the torque ripple is significantly reduced in this case.

Meanwhile, by using the boost converter, input current Is may be controlled, thereby improving input power factor.

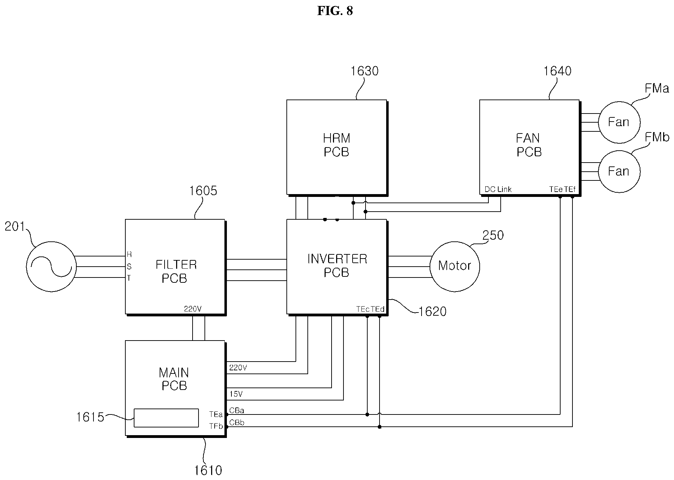

FIG. 7 is an example circuit diagram illustrating a motor driving apparatus according to an embodiment of the present disclosure, and FIGS. 8 to 15 are diagrams referred to in the description of FIG. 7.

A motor driving apparatus 700 according to an embodiment of the present disclosure includes a rectifier 510 configured to rectify a three-phase alternating current (AC) voltage 201, a DC link capacitor C configured to store a pulsating voltage Vdc from the rectifier 510, a first voltage detector B configured to detect the pulsating voltage Vdc stored in the DC link capacitor C, a harmonic reducer 520 disposed between the rectifier 510 and the DC link capacitor C and including at least one switching element and a second capacitor C1, and configured to reduce harmonic in the three-phase AC voltage 201, a current detector G configured to detect a current im2 flowing in the harmonic reducer 520, a second voltage detector F configured to detect a voltage Vc1 at both ends of the second capacitor C1 in the harmonic reducer 520, an inverter 220 having a plurality of switching elements and configured to output a converted AC voltage to a motor based on a voltage at both ends of the DC link capacitor C, and a controller 230 configured to control the harmonic reducer 520, based on the pulsating voltage Vdc from the first voltage detector B, the current im2 detected by the current detector G, and the voltage detected by the second voltage detector F.

Meanwhile, when the voltage at both ends of the DC link capacitor C pulsates due to low capacitance of the DC link capacitor C, the output harmonics of the inverter 220 can be efficiently reduced based on the harmonic reducer 520.

In particular, the motor driving apparatus 700 according to an embodiment of the present disclosure may reduce harmonics based on the three-phase AC voltage 201, without having an input current detector for detecting an input current when the three-phase AC voltage 201 is input.

Meanwhile, the harmonic reducer 520 is turned on or off based on output power GRb of the inverter 220. Accordingly, harmonics of an input current based on the three-phase AC voltage may be reduced.

The International Standard for surge protection IEC 61000 described above specifies requirements for Total Harmonic Distortion (THD) (1st-40th) and Partial Weighted Harmonic Distortion (PWHD) (14th-40th). According to the present disclosure, total harmonic distortion (THD) and partial weighted harmonic distortion (PWHD) may be reduced. Also, 40th and lower harmonics may be reduced.

To this end, the controller 230 may control a switching operation of the switching elements S1 and S2 in the harmonic reducer 520 based on a 6th or 12th harmonic component of the pulsating voltage Vdc. Accordingly, harmonics with a specific wavenumber of the input three-phase AC voltage 201 can be efficiently reduced. Further, harmonics of a current flowing through the inverter may be reduced.

Meanwhile, the controller 230 may generate a current reference based on the 6th or 12th harmonic component of the pulsating voltage Vdc, and may control operation of the harmonic reducer 520 based on the generated current reference. Accordingly, harmonics with a specific wavenumber of the input three-phase AC voltage 201 can be efficiently reduced.

Meanwhile, the controller 230 may control a turn-on duty of the switching elements S1 and S2 in the harmonic reducer 520 to increase as the 6th or 12th harmonic component of the pulsating voltage Vdc increases. Accordingly, harmonics with a specific wavenumber of the input three-phase AC voltage 201 can be efficiently reduced.

In the drawing, an example is illustrated in which the rectifier 510 includes full-bridge diodes Da, D'a, Db, D'b, Dc, and D'c for rectifying the three-phase AC voltage.

That is, a first pair of diodes Da and D'a are connected in series to each other, a second pair of diodes Db and D'b are connected in series to each other, and a third pair of diodes Dc and D'c are connected in series to each other, between nodes n1 and n2 which are both ends of the DC link.

Meanwhile, an R-phase AC voltage among three phases is applied to node na between the first pair of diodes Da and D'a, an S-phase AC voltage among three phases is applied to node nb between the second pair of diodes Db and D'b, and a T-phase AC voltage among three phases is applied to node nc between the third pair of diodes Dc and D'c.

In the drawing, an example is illustrated in which an input current im1 flows to node nb by the applied S-phase AC voltage.

Meanwhile, the harmonic reducer 520 may reduce harmonics of the three-phase AC voltage.

Meanwhile, the harmonic reducer 520 may include an inductor L1, a first switching element S1, and a second capacitor C1 which are connected across the DC-DC capacitor C, and a second switching element S2 connected between the inductor L1 and the first switching element S1 and between the second capacitor C1 and the DC link capacitor C.

That is, the inductor L1 and the second switching element S2 may be connected across the DC link capacitor C in the harmonic reducer 520, and the first switching element S1 and the second capacitor C1 may be connected across the second switching element S2.

Specifically, a first end of the inductor L1 is connected to node n1 which is one of both ends of the DC link capacitor C, and a first end of the first switching element S1 is connected to node n3 which is a second end of the inductor L1.

The second capacitor C1 is connected between node n4, which is a second end of the first switching element S1, and node n2 which is a second end of the DC link capacitor C.

The second switching element S2 is connected between node n3, which is the second end of the inductor L1, and node n2 which is the second end of the DC link capacitor C.

Meanwhile, the operation of the first switching element S1 or the second switching element S2 may be controlled by a switching control signal Scc from the controller 230.

Meanwhile, the inverter controller 230b may control the switching elements in the inverter 220 based on an output current iₒ that flows between the inverter 220 and the motor 250.

Particularly, the inverter controller 230b may output an inverter switching control signal Sic for controlling the switching elements in the inverter 220 based on the output current iₒ from the output current detector E.

FIG. 8 illustrates an example of the arrangement of circuit boards of a motor driving apparatus according to an embodiment of the present disclosure.

Referring to the drawing, the three-phase AC voltage 201 may pass through a filter circuit board 1605 on which a noise filter and the like are disposed, to be inputted to an inverter circuit board 1620 on which the inverter 220, the DC link voltage detector B, and the like are disposed.

Meanwhile, the inverter circuit board 1620 may further include the rectifier 510, the DC link capacitor C, and the like of FIG. 7.

Meanwhile, a main circuit board 1610 may include a voltage dropper 1615 configured to output a voltage of 15V based on a voltage of 220V, which is an example of a single-phase voltage, from the filter circuit board 1605 and the like.

Meanwhile, the main circuit board 1610 may output voltages 15V, 220V, and the like to the inverter circuit board 1620.

Meanwhile, the main circuit board 1610 may communicate with the inverter circuit board 1620 and a fan circuit board 1640 through a plurality of communication terminals TEa and TEb.

Meanwhile, the inverter circuit board 1620 may drive the compressor motor 250, and the fan circuit board 1640 may drive fan motors FMa and FMb.

Meanwhile, the inverter circuit board 1620 may communicate with the main circuit board 1610 through a plurality of communication terminals TEc and TEd.

Meanwhile, a separate communication line may not be provided between the inverter circuit board 1620 and the harmonic reduction circuit board 1630.

Accordingly, the harmonic reduction circuit board 1630 may be operated independently, thereby reducing production costs and the like.

Meanwhile, the harmonic reducer 520, the current detector G, the first voltage detector B, the second voltage detector F, and the controller 230 may be disposed on the first circuit board 1630, and the inverter 220 may be disposed on the second circuit board 1620 spaced apart from the first circuit board 1630. Accordingly, as the inverter 220 and the harmonic reducer 520 are disposed on separate circuit boards, the harmonic reducer 520 may be operated efficiently.

In this case, the first circuit board 1630 may be the harmonic reduction circuit board 1630, and the second circuit board 1620 may be the inverter circuit board 1620.

Meanwhile, the rectifier 510 and the DC link capacitor C may be further disposed on the second circuit board 1620.

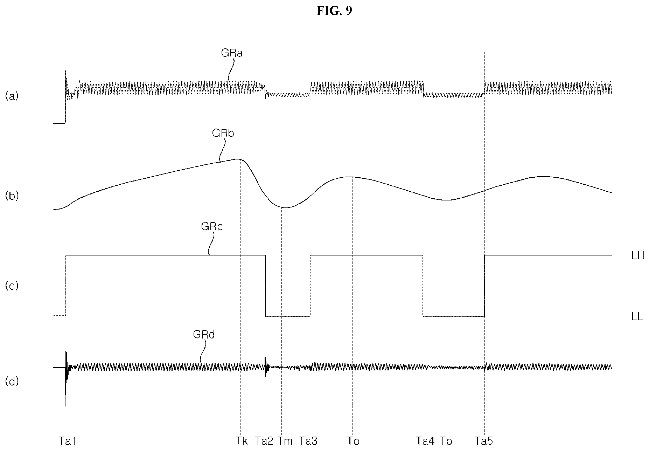

FIG. 9 is a diagram referred to in the description of operation of a harmonic reducer based on the output power of an inverter.

Referring to the drawing, (a) of FIG. 9 illustrates an example of a pulsating voltage GRa of the DC link capacitor C, (b) of FIG. 9 illustrates an example of output power GRb of the inverter 220, (c) of FIG. 9 illustrates an example of a turn-on signal GRc for the harmonic reducer 520, and (d) of FIG. 9 illustrates an example of a current GRd flowing through the inductor L1 in the harmonic reducer 520.

Referring to the drawing, the harmonic reducer 520 is turned on or off based on the output power GRb of the inverter 220.

That is, the controller 230 may control the harmonic reducer 520 to be turned on or off based on the output power GRb of the inverter 220.

For example, the controller 230 may calculate output power of the inverter 220 based on the pulsating voltage Vdc of the DC link capacitor C detected by the DC link voltage detector B, and may control the harmonic reducer 520 to be turned on or off based on the output power of the inverter 220.

Meanwhile, the harmonic reducer 520 may be turned on based on the output power GRb of the inverter 220 that increases.

For example, if the output power GRb of the inverter 220 increases from time Ta1, the controller 230 may control the harmonic reducer 520 to be turned on from time Ta1 to time Ta2. Accordingly, the switching elements S1 and S2 in the harmonic reducer 520 may perform a switching operation.

Meanwhile, the harmonic reducer 520 may be turned off based on the output power GRb of the inverter 220 that increases and then decreases.

For example, if the output power GRb of the inverter 220 increases from time Ta1 to time Tk, and then decreases from time Tk, the controller 230 may control the harmonic reducer 520 to be turned off from time Ta2 to time Ta3. Accordingly, all the switching elements S1 and S2 in the harmonic reducer 520 may be turned off.

Meanwhile, the harmonic reducer 520 may be turned on based on the output power GRb of the inverter 220 that decreases and then increases.

For example, if the output power GRb of the inverter 220 decreases from time Tk to time Tm and then increases from time Tm, the controller 230 may control the harmonic reducer 520 to be turned on from time Ta3 to time Ta4. Accordingly, the switching elements S1 and S2 in the harmonic reducer 520 may perform a switching operation.

Meanwhile, the controller 230 may control the harmonic reducer 520 to be turned off from time Ta4 to time Ta5 based on the output power GRb of the inverter 220 that increases and then decreases from time To. Accordingly, all the switching elements S1 and S2 in the harmonic reducer 520 may be turned off.

Meanwhile, the controller 230 may control the harmonic reducer 520 to be turned on from time Ta5 based on the output power GRb of the inverter 220 that decreases and then increases from time Tp. Accordingly, the switching elements S1 and S2 in the harmonic reducer 520 may perform a switching operation.

That is, the harmonic reducer 520 may be turned on during a first period from Ta1 to Ta2 based on the output power GRb of the inverter 220 that increases, may be turned off during a second period from Ta2 to Ta3 based on the output power GRb of the inverter 220 that increases and then decreases, and may be turned on during a third period from Ta4 to Ta5 based on the output power GRb of the inverter 220 that decreases and then increases. Accordingly, it is possible to reduce harmonic distortion of the current outputted to the inverter 220 while reducing harmonics of the input three-phase AC voltage 201.

Meanwhile, the pulsating voltage Vdc stored in the capacitor C may be less than the harmonic reducer 520 is turned off than when turned on.

In the drawing, an example is illustrated in which a level of the pulsating voltage Vdc is higher during a period from Ta1 to Ta2, a period from Ta3 to Ta4, and a period after Ta5 when the harmonic reducer 520 is turned on, than a level of the pulsating voltage Vdc during a period from Ta2 to Ta3 and a period from Ta4 and Ta5 when the harmonic reducer 520 is turned off. Accordingly, it is possible to reduce harmonics in an input current based on a three-phase AC voltage.

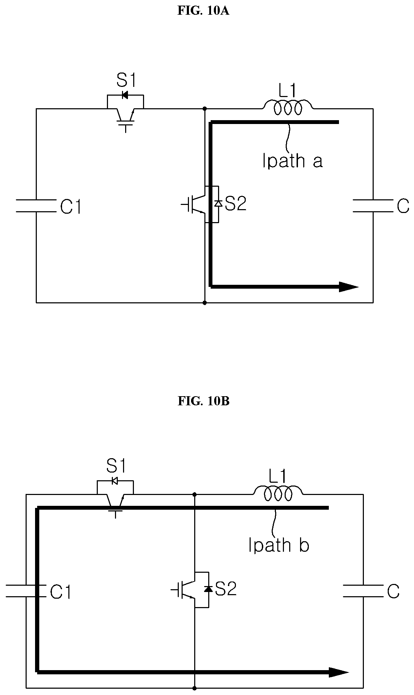

FIGS. 10A to 10D are diagrams illustrating various operations of the harmonic reducer 520 while being turned on.

FIG. 10A illustrates an example in which a first switching element S1 in the harmonic reducer 520 is turned off, and a second switching element S2 is turned on, thereby forming a first current path path a that flows through the inductor L1 and the second switching element S2.

FIG. 10B illustrates an example in which a first switching element S1 in the harmonic reducer 520 is turned on, and a second switching element S2 is turned off, thereby forming a second current path path b that flows through the inductor L1, the first switching element S1, and a second capacitor C1.

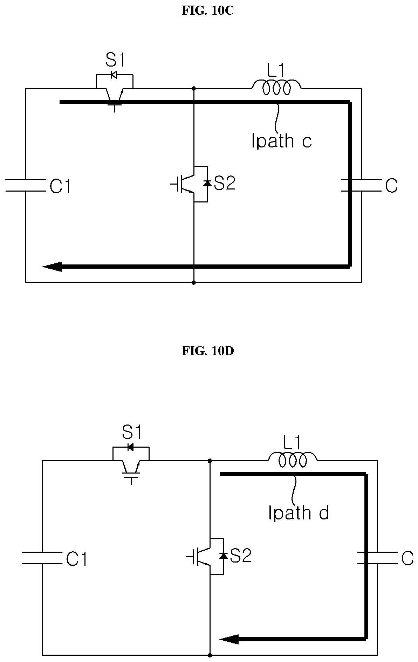

FIG. 10C illustrates an example in which a first switching element S1 in the harmonic reducer 520 is turned on, and a second switching element S2 is turned off, thereby forming a third current path path c that flows through the first switching element S1, the inductor L1, and the DC link capacitor C.

FIG. 10D illustrates an example in which a first switching element S1 in the harmonic reducer 520 is turned off, and a second switching element S2 is turned on, thereby forming a fourth current path path d that flows through the inductor L1 and the DC link capacitor C.

Meanwhile, according to the embodiments of FIGS. 10A to 10D, when the harmonic reducer 520 is turned on, the first switching element S1 and the second switching element S2 may operate in a mutually complementary manner.

That is, when the harmonic reducer 520 is turned on, one of the first switching element S1 and the second switching element S2 may be turned on, and the other may be turned off.

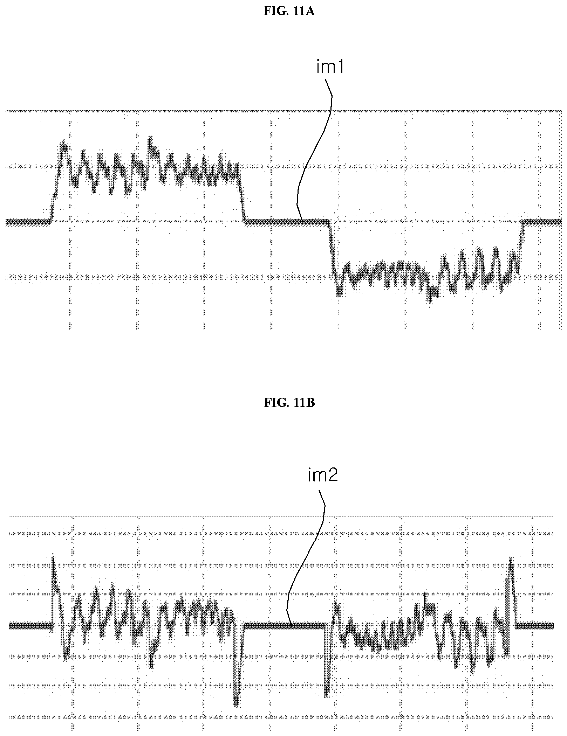

FIG. 11A illustrates a waveform of the input current im1 that is inputted to the rectifier 510 of FIG. 7. The input current im1 may contain all harmonic components.

That is, the waveform of the input current im1 of FIG. 11A may be a waveform corresponding to turning off of the harmonic reducer 520.

Then, FIG. 11B illustrates a waveform of the current im2 that flows in the inductor L1 as the harmonic reducer 520 is turned on. The current im2 flowing in the inductor L1 may be a compensation current waveform for reducing 1st to 40th harmonics of harmonic components.

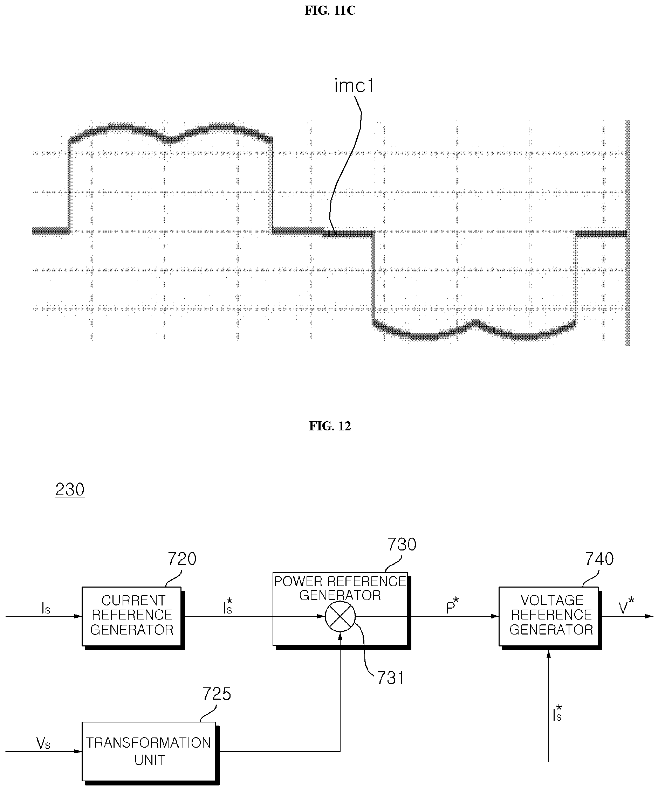

Next, FIG. 11C illustrates a waveform of an input current imc1 in which as the harmonic reducer 520 is turned on, a waveform of the input current im1 of FIG. 11A is compensated by the waveform of the current im2 flowing in the inductor L1, such that 1st to 40th harmonics are reduced.

As described above, by reducing the harmonic of the input current based on a three-phase AC voltage, the control stability may be improved during operation of the motor driving apparatus.

FIG. 12 is an exemplary internal block diagram illustrating the controller of FIG. 3.

Referring to the drawing, the controller 230 may include an input current reference generator 720, a power reference generator 730, a converter 725, and a voltage reference generator 740.

The controller 230 may filter or extract a 40th or lower harmonic component of the pulsating voltage, and may control the harmonic reducer 520 based on the extracted harmonic current.

The input current reference generator 720 may be configured to extract a 40th or lower harmonic current I*s among input currents Is based on the three-phase AC voltage 201.

The converter 725 may perform axis transformation on the three-phase AC voltage Vs based on a rotating coordinate system. The transformed three-phase AC voltage may be inputted to the power reference generator 730.

The power reference generator 730 may include a multiplier for multiplying the 40th or lower harmonic current I*s, which are extracted by the input current reference generator 720, and the three-phase AC voltage component output by the converter 725.

Accordingly, the power reference generator 730 may generate a power reference value P* based on the 40th or lower harmonic current I*s.

The voltage reference generator 740 may generate a compensation voltage reference value V* based on the power reference value P*.

Particularly, the voltage reference generator 740 may generate the compensation voltage reference value V* based on the power reference value P* and the 40th or lower harmonic current I*s.

The controller 230 may control the first switching element S1 or the second switching element S2 in the harmonic reducer 520 to operate based on the compensation voltage reference value V*.

Alternatively, the controller 230 may control the upper arm switching elements Sa, Sb, and Sc and the lower arm switching elements S'a, S'b, and S'c to operate based on the compensation voltage reference value V*.

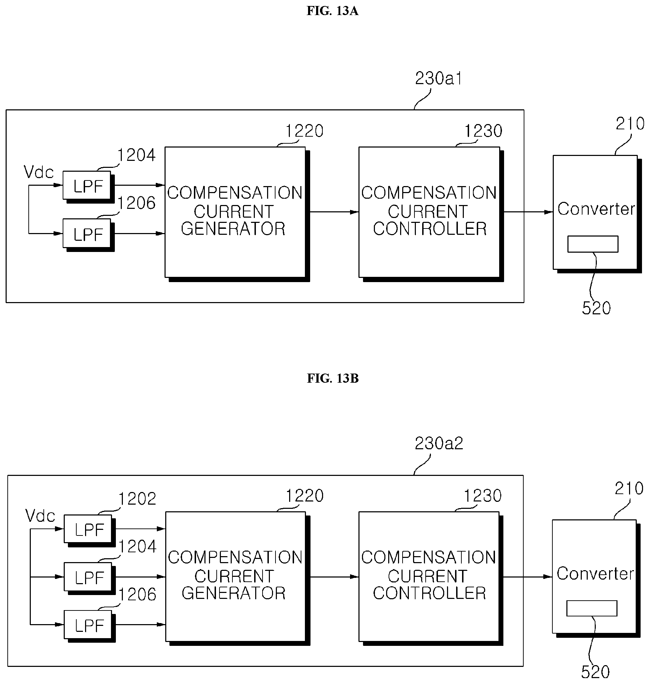

FIG. 13A is an internal block diagram illustrating an example of the converter controller of FIG. 7.

Referring to the drawing, a controller 230a1 may include a first filter 1204 configured to filter a DC component of the pulsating voltage Vdc, and a second filter 1206 configured to filter a 6th or 12th harmonic component of the pulsating voltage Vdc.

Meanwhile, the controller 230a1 may further include a compensation current generator 1220 configured to generate a compensation current based on a DC component or a fundamental (first-order) harmonic component of the pulsating voltage Vdc from the first filter 1204, or based on a 6th or 12th harmonic component of the pulsating voltage Vdc.

For example, the compensation current generator 1220 may generate a compensation current of a 5th or 7th harmonic of an input current corresponding to the 6th harmonic of the pulsating voltage Vdc, or may generate a compensation current of a 11th or 13th harmonic of an input current corresponding to the 12th harmonic of the pulsating voltage Vdc.

Meanwhile, the controller 230a1 may further include a compensation current controller 1230 configured to control a compensation current based on the compensation current generated by the compensation current generator 1220.

For example, the compensation current controller 1230 may control the operation of the switching elements S1 and S2 of the harmonic reducer 520 in the converter 210.

Specifically, the compensation current controller 1230 may control a turn-on duty of the switching elements S1 and S2 in the harmonic reducer 520 to increase as the 6th or 12th harmonic component of the pulsating voltage Vdc increases. Accordingly, it is possible to efficiently reduce a specific order harmonic of an input current based on the three-phase AC voltage.

FIG. 13B is an internal block diagram illustrating another example of the converter controller of FIG. 7.

Referring to the drawing, a controller 230a2 may include a first filter 1204 configured to filter a DC component of the pulsating voltage Vdc, a second filter 1206 configured to filter a 6th or 12th harmonic component of the pulsating voltage Vdc, and a third filter 1202 configured to filter a 40th or lower harmonic component of the pulsating voltage Vdc.

Unlike the controller 230a1 of FIG. 13A, the controller 230a2 may further include the third filter 1202. Accordingly, it is possible to further compensate for the 40th or lower harmonic component of the pulsating voltage Vdc.

Meanwhile, the controller 230a2 may further include a compensation current generator 1220 configured to generate a compensation current based on a DC component or a fundamental (first-order) harmonic component of the pulsating voltage Vdc from the first filter 1204, or based on a 6th or 12th harmonic component of the pulsating voltage Vdc.

Meanwhile, the compensation current generator 1220 may also generate a compensation current based on a DC component or a fundamental (first-order) harmonic component of the pulsating voltage Vdc from the first filter 1204, and based on a 6th or 12th harmonic component of the pulsating voltage Vdc.

Meanwhile, the compensation current generator 1220 may further include a compensation current controller 1230 configured to control a compensation current based on the compensation current generated by the compensation current generator 1220.

For example, the compensation current controller 1230 may control the operation of the switching elements S1 and S2 of the harmonic reducer 520 in the converter 210.

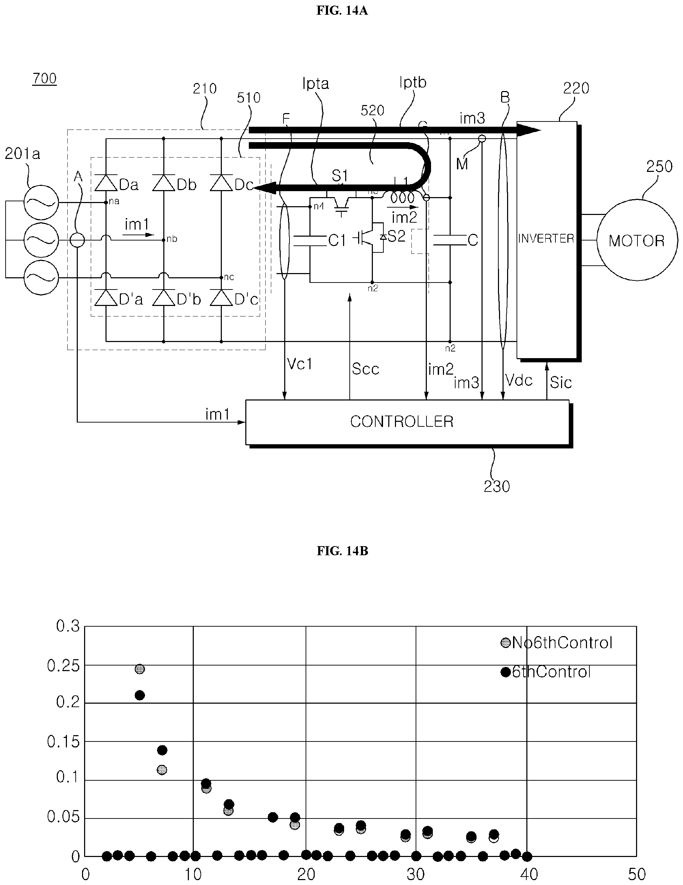

FIG. 14A is a diagram illustrating an example of reducing harmonics based on the operation of the harmonic reducer 520 and the inverter 220.

Referring to the drawing, the controller 230 according to an embodiment of the present disclosure may output a switching control signal Scc to the harmonic reducer 520, and may output an inverter switching control signal Sic to the inverter 220.

Particularly, the controller 230 may control the harmonic reducer 520 to operate based on the switching control signal Scc to reduce a 40th or lower harmonic component and a 6th or 12th harmonic component of the pulsating voltage Vdc.

Meanwhile, the controller 230 may control the inverter 220 to operate based on the inverter switching control signal Sic to reduce a 40th or lower harmonic component.

FIG. 14B is a diagram illustrating an example of compensating for a 40th or lower harmonic of the pulsating voltage Vdc and compensating for a 6th harmonic of the pulsating voltage Vdc.

Referring to the drawing, the horizontal axis represents a harmonic order and the vertical axis represents a ratio of harmonic to fundamental.

That is, in the case where the controller 230a2 compensates for the 40th and lower harmonics, it can be seen that harmonics from 10th to 40th order may be significantly reduced.

Meanwhile, in the case where the controller 230a2 compensates for the 40th and lower harmonics, a substantial part of 10th and lower harmonic components remains.

Thus, the controller 230a1 of FIG. 13A or the controller 230a2 of FIG. 13B may compensate for a 6th harmonic of the pulsating voltage Vdc.

Accordingly, it can be seen that by compensating for the 6th harmonic of the pulsating voltage Vdc, the 6th harmonic component may be significantly reduced.

Accordingly, a 5th or 7th harmonic of the input current corresponding to the 6th harmonic of the pulsating voltage Vdc may be significantly reduced.

Similarly, in the case where the controller 230a of FIG. 13A or the controller 230b of FIG. 13B compensates for a 12th harmonic of the pulsating voltage Vdc, a 11th or 13th harmonic may be significantly reduced.

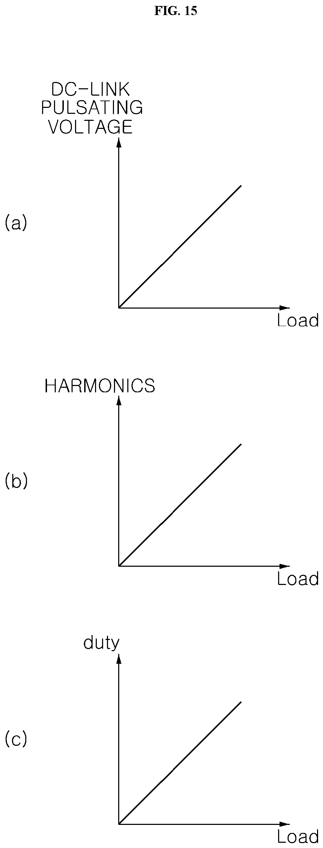

FIG. 15 is a diagram referred to in the description of operation based on output power or load of an inverter.

Referring to the drawing, as illustrated in (a) of FIG. 15, a level of the pulsating voltage Vdc stored in the DC link capacitor C increases as the output power or load of the inverter increases.

Accordingly, as illustrated in (b) of FIG. 15, a harmonic of an input current based on the three-phase AC voltage 201 increases as the output power or load of the inverter increases.

Accordingly, the controller 230 according to an embodiment of the present disclosure may control a turn-on duty of the switching elements S1 and S2 in the harmonic reducer 520 to increase as the harmonic of the input current based on the three-phase AC voltage 201 increases as illustrated in (c) of FIG. 15.

Particularly, the controller 230 may control a turn-on duty of the switching elements S1 and S2 in the harmonic reducer 520 to increase as a 6th or 12th harmonic component of the pulsating voltage Vdc increases. Accordingly, it is possible to efficiently reduce a specific order harmonic of an input current based on the three-phase AC voltage.

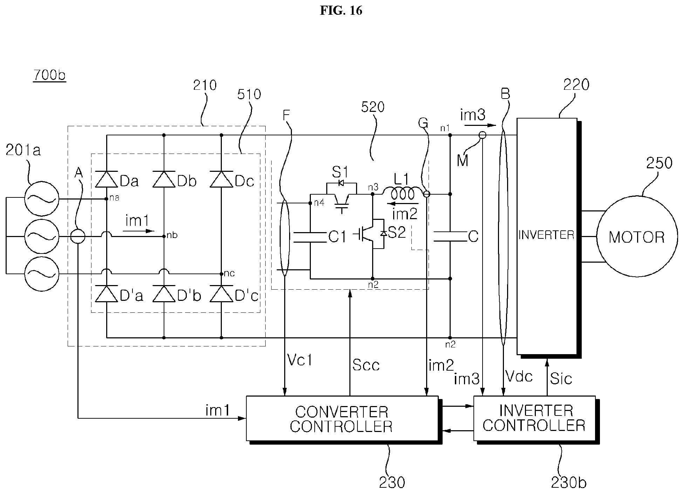

FIG. 16 is an example circuit diagram illustrating a motor driving apparatus according to another embodiment of the present disclosure.

Referring to the drawing, a motor driving apparatus 700b according to another embodiment of the present disclosure is similar to FIG. 7, but is different in that it further includes a second current detector M configured to detect a second current im3 flowing between the DC link capacitor C and the inverter 220.

In this case, the second current im3 may be referred to as a DC-link current.

Meanwhile, the controller 230 may control the harmonic reducer 520 based on the pulsating voltage Vdc from the first voltage detector B, the current im2 detected by the current detector G, the voltage Vc1 detected by the second voltage detector F, and the second current im3 from the second current detector M, thereby reducing harmonics without detecting an input current when the three-phase AC voltage 201 is input.

Meanwhile, the harmonic reducer 520, the current detector G, the first voltage detector B, the second current detector M, the second voltage detector F, and the controller 230 may be disposed on the first circuit board 1630, and the inverter 220 may be disposed on the second circuit board 1620 spaced apart from the first circuit board 1630. Accordingly, the harmonic reducer 520 may be operated efficiently.

Meanwhile, the controller 230 may control the harmonic reducer 520 based on the information about the pulsating voltage Vdc from the DC link voltage detector B and the information about the inverter current im3 from the inverter current detector M.

Specifically, the controller 230 may calculate the output power of the inverter 220 based on the information about the pulsating voltage Vdc from the DC link voltage detector B and the information about the inverter current im3 from the inverter current detector M, and may control the harmonic reducer 520 to be turned on or turned off based on the output power of the inverter 220. Accordingly, the harmonic of the input current based on the three-phase AC voltage may be reduced.

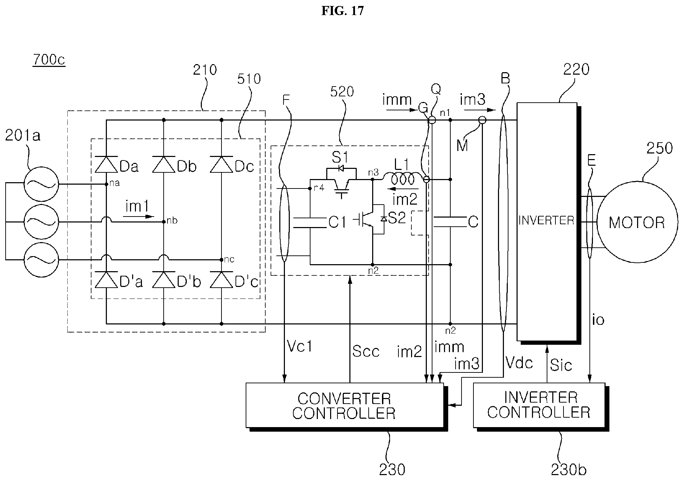

FIG. 17 is an example circuit diagram illustrating a motor driving apparatus according to yet another embodiment of the present disclosure.

Referring to the drawing, a motor driving apparatus 700c according to yet another embodiment of the present disclosure is similar to FIG. 7, but is different in that it further includes a third current detector Q configured to detect a third current imm flowing between the rectifier 510 and the DC link capacitor C.

Meanwhile, the third current imm may be referred to as an inverter current.

Meanwhile, the controller 230 may control the harmonic reducer 520 based on the pulsating voltage Vdc from the first voltage detector B, the current im2 detected by the current detector G, the voltage Vc1 detected by the second voltage detector F, and the third current imm from the third current detector Q, thereby reducing harmonics without detecting an input current when the three-phase AC voltage 201 is input.

Meanwhile, the harmonic reducer 520, the current detector G, the first voltage detector B, the third current detector Q, the second voltage detector F, and the controller 230 may be disposed on the first circuit board 1630, and the inverter 220 may be disposed on the second circuit board 1620 spaced apart from the first circuit board 1630. Accordingly, the harmonic reducer 520 may be operated efficiently.

Meanwhile, the motor driving apparatus 700c according to yet another embodiment of the present disclosure may further include a second current detector M configured to detect a second current im3 flowing between the DC link capacitor C and the inverter 220.

Meanwhile, the controller 230 may control the harmonic reducer 520 based on the pulsating voltage Vdc from the first voltage detector B, the current im2 detected by the current detector G, the voltage Vc1 detected by the second voltage detector F, the third current imm from the third current detector Q, and the second current im3 from the second current detector M, thereby reducing harmonics without detecting an input current when the three-phase AC voltage 201 is input.

Meanwhile, the harmonic reducer 520, the current detector G, the first voltage detector B, the third current detector Q, the second voltage detector F, the second current detector M, and the controller 230 may be disposed on the first circuit board 1630, and the inverter 220 may be disposed on the second circuit board 1620 spaced apart from the first circuit board 1630. Accordingly, the harmonic reducer 520 may be operated efficiently.

As described above, a motor driving apparatus and an air conditioner including the same according to an embodiment of the present disclosure includes: a rectifier configured to rectify a three-phase alternating current (AC) voltage; a capacitor configured to store a pulsating voltage from the rectifier; a first voltage detector configured to detect the pulsating voltage stored in the capacitor; a harmonic reducer disposed between the rectifier and the capacitor and including at least one switching element and a second capacitor, and configured to reduce harmonics in the three-phase AC voltage; a current detector configured to detect a current flowing in the harmonic reducer; a second voltage detector configured to detect a voltage at both ends of the second capacitor in the harmonic reducer; an inverter including a plurality of switching elements, and configured to output a converted AC voltage to a motor based on a voltage at both ends of the capacitor; and a controller configured to control the harmonic reducer, based on the pulsating voltage from the first voltage detector, the current detected by the current detector, and the voltage detected by the second voltage detector. Accordingly, it is possible to reduce harmonics without detecting an input current when a three-phase AC voltage is input.

Meanwhile, the harmonic reducer, the current detector, the first voltage detector, the second voltage detector, and the controller may be disposed on a first circuit board, wherein the inverter may be disposed on a second circuit board spaced apart from the first circuit board. Accordingly, as the inverter and the harmonic reducer may be disposed on separate circuit boards, the harmonic reducer may be operated efficiently.

Meanwhile, the rectifier and the capacitor may be further disposed on the second circuit board. Accordingly, the harmonic reducer can be efficiently operated.

Meanwhile, the motor driving apparatus and the air conditioner including the same according to the embodiment of the present disclosure may further include a second current detector configured to detect a second current flowing between the capacitor and the inverter, wherein the controller may be configured to control the harmonic reducer based on the pulsating voltage from the first voltage detector, the current detected by the current detector, the voltage detected by the second voltage detector, and the second current detected by the second current detector. Accordingly, it is possible to reduce harmonics without detecting an input current when a three-phase AC voltage is input.

Meanwhile, the harmonic reducer, the current detector, the first voltage detector, the second current detector, the second voltage detector, and the controller may be disposed on the first circuit board, wherein the inverter may be disposed on a second circuit board spaced apart from the first circuit board. Accordingly, the harmonic reducer can be efficiently operated.

Meanwhile, the motor driving apparatus and the air conditioner including the same may further include a third current detector configured to detect a third current flowing between the rectifier and the capacitor, wherein the controller may be configured to control the harmonic reducer based on the pulsating voltage from the first voltage detector, the current detected by the current detector, the voltage detected by the second voltage detector, and the third current detected by the third current detector. Accordingly, it is possible to reduce harmonics without detecting an input current when a three-phase AC voltage is input.

Meanwhile, the harmonic reducer, the current detector, the first voltage detector, the third current detector, the second voltage detector, and the controller may be disposed on a first circuit board, wherein the inverter may be disposed on a second circuit board spaced apart from the first circuit board. Accordingly, the harmonic reducer can be efficiently operated.

Meanwhile, the harmonic reducer may be turned off based on increase and then decrease of the output power of the inverter, and may be turned on based on decrease and then increase of the output power of the inverter. Accordingly, it is possible to reduce harmonics without detecting an input current when a three-phase AC voltage is input.

Meanwhile, the harmonic reducer may be turned on based on increase of the output power of the inverter. Accordingly, it is possible to reduce harmonics without detecting an input current when a three-phase AC voltage is input.

Meanwhile, the harmonic reducer may be turned on during a first period based on increase of the output power of the inverter, the harmonic reducer may be turned off during a second period based on increase and then decrease of the output power of the inverter, and the harmonic reducer may be turned on during a third period based on decrease and then increase of the output power of the inverter. Accordingly, it is possible to reduce harmonics without detecting an input current when a three-phase AC voltage is input.

Meanwhile, the pulsating voltage stored in the capacitor may be less than the harmonic reducer is turned off than when turned on. Accordingly, it is possible to reduce harmonics without detecting an input current when a three-phase AC voltage is input.

Meanwhile, the controller may be configured to control a switching operation of the switching element, based on a 6th or 12th harmonic component of the pulsating voltage. Accordingly, it is possible to efficiently reduce a specific order harmonic of an input current based on the three-phase AC voltage. Furthermore, it is possible to reduce harmonic distortion of a current flowing through the inverter.

Meanwhile, the controller may be configured to generate a current reference based on the 6th or 12th harmonic component of the pulsating voltage, and to control operation of the harmonic reducer based on the generated current reference. Accordingly, it is possible to efficiently reduce a specific order harmonic of an input current based on the three-phase AC voltage. Furthermore, it is possible to reduce harmonic distortion of a current flowing through the inverter.

Meanwhile, the controller may be configured to increase a turn-on duty of the switching element as the 6th or 12th harmonic component of the pulsating voltage increases. Accordingly, it is possible to efficiently reduce a specific order harmonic of an input current based on the three-phase AC voltage. Furthermore, it is possible to reduce harmonic distortion of a current flowing through the inverter.

Meanwhile, the harmonic reducer may include: an inductor, a first switching element, and a second capacitor which are connected between both ends of the capacitor; and a second switching element connected between the inductor and the first switching element and between the second capacitor and the capacitor. Accordingly, it is possible to reduce harmonics without detecting an input current when a three-phase AC voltage is input.

Meanwhile, the controller may be configured to extract a 40th or lower harmonic component of the pulsating voltage, and may control the harmonic reducer based on the extracted harmonic current. Accordingly, it is possible to efficiently reduce a specific order harmonic of an input current based on the three-phase AC voltage.

Meanwhile, the capacitor may include a film capacitor. Accordingly, the motor driving apparatus may be made compact.

Meanwhile, the motor driving apparatus and the air conditioner including the same may further include an inverter controller configured to control the inverter. Accordingly, the inverter can be efficiently controlled.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present invention.

## Claims

1. A motor driving apparatus (700), comprising:
a rectifier (510) configured to rectify a three-phase alternating current (AC) voltage;
a capacitor (C) configured to store a pulsating voltage (Vdc) from the rectifier (510);
a first voltage detector (B) configured to detect the pulsating voltage stored in the capacitor;
a harmonic reducer (520) disposed between the rectifier and the capacitor and including at least one switching element and a second capacitor (C1), and configured to reduce harmonics in the three-phase AC voltage;
a current detector (G) configured to detect a current (im2) flowing in the harmonic reducer;
a second voltage detector (F) configured to detect a voltage (Vc1) at both ends of the second capacitor in the harmonic reducer;
an inverter (220) including a plurality of switching elements, and configured to output a converted AC voltage to a motor based on a voltage at both ends of the capacitor; and
a controller (230) configured to control the harmonic reducer (520), based on the pulsating voltage (Vdc) from the first voltage detector (B), the current (im2) detected by the current detector (G), and the voltage detected by the second voltage detector (F).

2. The motor driving apparatus of claim 1, wherein the harmonic reducer (520), the current detector (G), the first voltage detector (B), the second voltage detector (F), and the controller (230) are disposed on a first circuit board (1630),
wherein the inverter (220) is disposed on a second circuit board (1620) spaced apart from the first circuit board.

3. The motor driving apparatus of claim 2, wherein the rectifier (510) and the capacitor (C) are further disposed on the second circuit board (1620).

4. The motor driving apparatus of any one of claims 1 to 3, further comprising a second current detector (M) configured to detect a second current flowing between the capacitor and the inverter,
wherein the controller (230) is configured to control the harmonic reducer based on the pulsating voltage from the first voltage detector, the current detected by the current detector, the voltage detected by the second voltage detector, and the second current detected by the second current detector.

5. The motor driving apparatus of claim 4, wherein the harmonic reducer (520), the current detector (G), the first voltage detector (B), the second current detector (F), the second voltage detector (F), and the controller (230) are disposed on the first circuit board (1630),
wherein the inverter (220) is disposed on a second circuit board spaced apart from the first circuit board (1620).

6. The motor driving apparatus of any one of claims 1 to 5, further comprising a third current detector configured to detect a third current flowing between the rectifier and the capacitor,
wherein the controller (230) is configured to control the harmonic reducer based on the pulsating voltage from the first voltage detector, the current detected by the current detector, the voltage detected by the second voltage detector, and the third current detected by the third current detector.

7. The motor driving apparatus of claim 6, wherein the harmonic reducer (520), the current detector (G), the first voltage detector (B), the third current detector (Q), the second voltage detector (F), and the controller (230) are disposed on a first circuit board (1630),
wherein the inverter (220) is disposed on a second circuit board spaced apart from the first circuit board (1620).

8. The motor driving apparatus of any one of claims 1 to 7, wherein the harmonic reducer (520) is turned off based on increase and then decrease of the output power of the inverter, and is turned on based on decrease and then increase of the output power of the inverter.

9. The motor driving apparatus of any one of claims 1 to 7, wherein the harmonic reducer (520) is turned on based on increase of the output power of the inverter.

10. The motor driving apparatus of any one of claims 1 to 7, wherein
the harmonic reducer (520) is turned on during a first period based on increase of the output power of the inverter,
the harmonic reducer (520) is turned off during a second period based on increase and then decrease of the output power of the inverter, and
the harmonic reducer (520) is turned on during a third period based on decrease and then increase of the output power of the inverter.

11. The motor driving apparatus of any one of claims 1 to 10, wherein the pulsating voltage stored in the capacitor is less than the harmonic reducer is turned off than when turned on.

12. The motor driving apparatus of any one of claims 1 to 11, wherein the controller (230) is configured to generate a current reference based on the 6th or 12th harmonic component of the pulsating voltage, and to control operation of the harmonic reducer based on the generated current reference.

13. The motor driving apparatus of any one of claims 1 to 12, wherein the controller (230) is configured to increase a turn-on duty of the switching element as the 6th or 12th harmonic component of the pulsating voltage increases.

14. The motor driving apparatus of any one of claims 1 to 13, wherein the harmonic reducer (520) comprises:
an inductor, a first switching element, and a second capacitor which are connected between both ends of the capacitor; and
a second switching element connected between the inductor and the first switching element and between the second capacitor and the capacitor.

15. An air conditioner (50) including a motor driving apparatus (700) of any one of claims 1 to 14.
